(19) Europäisches Patentamt
European Patent Office
Office européen des brevets

(11) Veröffentlichungsnummer: **0 189 224**
**A2**

# (12) EUROPÄISCHE PATENTANMELDUNG

(21) Anmeldenummer: 86200046.0

(22) Anmeldetag: 13.01.86

(51) Int. Cl.⁴: **C 01 B 33/107**, C 01 G 17/04

(30) Priorität: 25.01.85 DE 3502367

(43) Veröffentlichungstag der Anmeldung: 30.07.86
Patentblatt 86/31

(84) Benannte Vertragsstaaten: DE FR GB

(71) Anmelder: **Philips Patentverwaltung GmbH,**
**Billstrasse 80, D-2000 Hamburg 28 (DE)**
(84) Benannte Vertragsstaaten: DE

(71) Anmelder: **N.V. Philips' Gloeilampenfabrieken,**
**Groenewoudseweg 1, NL-5621 BA Eindhoven (NL)**
(84) Benannte Vertragsstaaten: FR GB

(72) Erfinder: **Rau, Hans, Prof. Dr., Brunnenstrasse 11,**
**D-5100 Aachen (DE)**

(74) Vertreter: **Piegler, Harald, Dipl.-Chem. et al, Philips**
**Patentverwaltung GmbH**
**Billstrasse 80 Postfach 10 51 49,**
**D-2000 Hamburg 28 (DE)**

## (54) Verfahren zum Entfernen von Wasserstoff aus in Siliziumtetrachlorid oder Germaniumtetrachlorid gelösten wasserstoffhaltigen Verbindungen.

(57) Verfahren zum Entfernen von Wasserstoff aus in Siliziumtetrachlorid oder Germaniumtetrachlorid gelösten wasserstoffhaltigen Verbindungen.

Durch eine Chlorierung oberhalb 1000°C werden sämtliche wasserstoffhaltige Verbindungen, auch organische Verbindungen, in wasserstofffreie Verbindungen, z.B. $CCl_4$, umgewandelt, die die Verarbeitung zu Lichtleitfasern nicht stören.

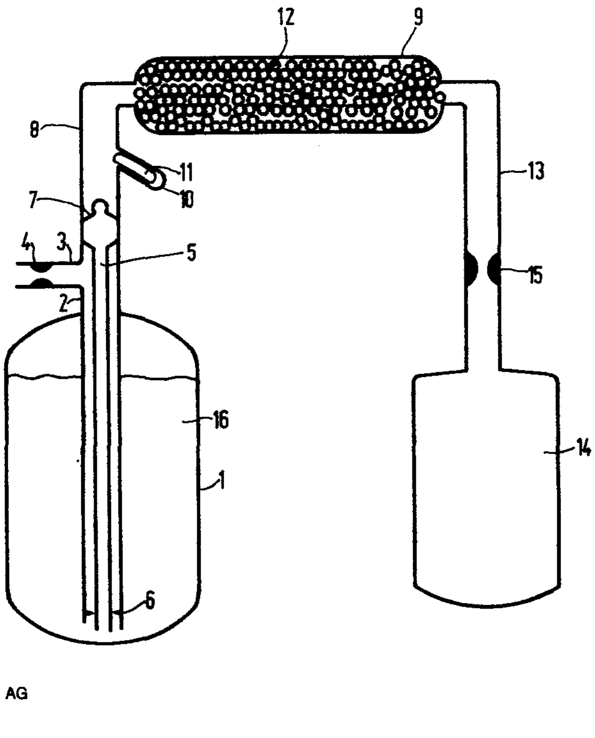

# Verfahren zum Entfernen von Wasserstoff aus in Siliziumtetrachlorid oder Germaniumtetrachlorid gelösten wasserstoffhaltigen Verbindungen

Die Erfindung betrifft ein Verfahren zum Entfernen von Wasserstoff aus in Siliziumtetrachlorid oder Germaniumtetrachlorid gelösten wasserstoffhaltigen Verbindungen durch Chlorieren der wasserstoffhaltigen Verbindungen.

Bei der Herstellung von Lichtleitfasern für die Nachrichtenübertragung auf der Basis $SiO_2/GeO_2$-Glas spielen OH-Verunreinigungen wegen ihrer optischen Absorption eine wichtige Rolle. Für hochwertige Fasern müssen diese Verunreinigungen auf ein sehr niedriges Niveau, etwa unter 0,1 Gewichts-ppm (entsprechend etwa 4,5 dB/km Zusatzdämpfung bei der Licht-Wellenlänge 1,38 µm) gebracht werden.

Zu den Hauptquellen für OH-Verunreinigungen in Lichtleitfasern gehören wasserstoffhaltige Verunreinigungen in den Ausgangsmaterialien $SiCl_4$ und $GeCl_4$. Wenn für die Herstellung der Fasern z.B. das PCVD-Verfahren angewendet wird, werden etwa 1/80 der im Gasstrom ($SiCl_4$+$GeCl_4$+$O_2$) angebotenen H-Atome als OH-Gruppen im Glas eingebaut (M. Lennartz, H. Rau, Betty Trafford, J. Ungelenk; ECOC 83 - 9th European Conference on Optical Communication (1983) 21-24). Die restlose Entfernung derartiger wasserstoffhaltiger Verunreinigungen im Ausgangsmaterial ist daher eine technisch wichtige Aufgabe.

Aus der DE-B-1 263 730 ist es bekannt, Germaniumtetrachlorid mit Salzsäure und Chlor zu reinigen. Dabei werden Arsen und andere derartige Verunreinigungen entfernt.

Nach der DE-B-1 948 911 werden selbst- oder leichtentzündliche Hydrogensilane aus Trichlorsilan, Siliziumtetrachlorid oder Gemischen derselben entfernt, indem wasserfreies Chlor bei einer Temperatur im Bereich von -30 bis +300°C in einer solchen Menge zugemischt wird, die der ein- bis zweifachen Menge entspricht, die stöchiometrisch für die Umsetzung der zu chlorierenden Silizium-Wasserstoff-Bindung erforderlich ist. Die Umsetzung läuft auch unterhalb und oberhalb des genannten Temperaturbereichs in der gewünschten Weise ab, und zwar im Dunkeln ebenso wie unter Belichtung, beispielsweise mit UV-Licht. Licht ist demnach ohne merklichen Einfluß auf den Verfahrensablauf.

Mit dem aus der DE-B-1 948 911 bekannten Verfahren wird eine selektive partielle Chlorierung der höher als Trichlorsilan hydrierten Hydrogensilane erzielt, d.h. Trichlorsilan wird nicht chloriert. Dieses Verfahren ist daher nicht geeignet, sämtlichen Wasserstoff aus den in Siliziumtetrachlorid gelösten wasserstoffhaltigen Verbindungen zu entfernen.

Aus der DE-A-2 805 824 ist es bekannt, Siliziumtetrachlorid, das als Verunreinigung ein Silan enthält, welches in seinem Molekül wenigstens ein direkt an das Siliziumatom gebundenes Wasserstoffatom aufweist, dadurch zu reinigen, daß das Siliziumtetrachlorid in Gegenwart von Chlor mit UV-Licht bestrahlt wird. Auf diese Weise wird also auch Trichlorsilan chloriert. Die Entfernung des dabei entstehenden Chlorwasserstoffs macht keine Schwierigkeiten (H. Rau, J.Chem. Thermodynamics 14 (1982) 77-82). Nach der DE-A-3 135 916 werden durch die aus der DE-A-2 805 824 bekannte Ultraviolett-Chlorierungsmethode auch kohlenwasserstoffhaltige und andere wasserstoffhaltige Verunreinigungen entfernt. Derartige

Verunreinigungen können durch vorhergehende Reinigungsmaßnahmen in das Siliziumtetrachlorid gelangen. So ist es z.B. aus der DE-C-867 544 bekannt, flüssige Chloride von Elementen der 4. Gruppe des Periodensystems mit Hilfe organischer Verbindungen, z.B. Alkohole, zu reinigen.

Bei den Untersuchungen, die zur Erfindung geführt haben, wurde jedoch festgestellt, daß die Reaktion mit Chlor unter UV-Bestrahlung nicht in jedem Falle zu einer restlosen Entfernung von Wasserstoff führt. So reagiert z.B. Äthylalkohol, $C_2H_5OH$, mit Chlor zu Chloral (Holleman-Richter, Lehrbuch der organischen Chemie, 37.-41. Auflage (Berlin 1961) S. 230):

$$C_2H_5OH + 4\ Cl_2 = CCl_3CHO + 5\ HCl$$

in dem noch ein H-Atom zurückbleibt.

Aufgabe der vorliegenden Erfindung ist es daher, den Umsatz allen Wasserstoffs zu HCl zu gewährleisten.

Diese Aufgabe wird erfindungsgemäß dadurch gelöst, daß die Chlorierung bei einer Temperatur oberhalb 1000°C durchgeführt wird.

Das zuvor angegebene Temperaturminimum ist wesentlich, weil unterhalb 1000°C die Entfernung des Wasserstoffs nicht vollständig ist. Höhere Temperaturen sind an sich vorteilhaft, weil die Reaktionsgeschwindigkeit zwischen Chlor und den vorhandenen wasserstoffhaltigen Verbindungen mit der Temperatur zunimmt, jedoch ergibt sich eine Obergrenze der Temperatur durch die notwendige Stabilität des Materials, aus dem der Reaktor und gegebenenfalls darin enthaltene Füllkörper bestehen. Bei Verwendung von Quarzglas liegt die Obergrenze bei etwa 1200°C.

Gemäß der Erfindung wird demnach die Reaktion zwischen Wasserstoff und Chlor nicht durch UV-Licht angeregt, sondern läuft thermisch bei hohen Temperaturen ab. Dabei werden z.B. organische Verunreinigungen vollständig in perchlorierte Verbindungen, besonders $CCl_4$, umgewandelt. $SiHCl_3$ oder $GeHCl_3$ werden selbstverständlich auch total chloriert.

Ein Ausführungsbeispiel der Erfindung ist in der Zeichnung dargestellt und wird im folgenden näher beschrieben.

Die einzige Figur der Zeichnung zeigt schematisch eine Glasapparatur zur Durchführung einer thermischen Chlorierung im Schnitt.

Die Glasapparatur weist einen Behälter 1 auf, der mit einer Zuleitung 2 versehen ist. Die Zuleitung 2 endet im Behälter 1 kurz oberhalb des Behälterbodens. Außerhalb des Behälters 1 ist die Zuleitung 2 mit einem Einfüllstutzen 3 versehen, in dem eine Abschmelzstelle 4 vorgesehen ist. Innerhalb der Zuleitung 2 ist eine Kapillare 5 (Innendurchmesser 0,4 mm) angeordnet, die ebenfalls kurz oberhalb des Behälterbodens endet. Mit 6 sind Glasspitzen angedeutet, die von der Zuleitung 2 ausgehend die Kapillare 5 zwecks mechanischer Stabilisierung berühren. Oberhalb des Einfüllstutzens 3 mündet die Kapillare 5 in ein Zerschlagventil 7, von dem eine Leitung 8 zu einem Reaktor 9 führt. Die Wand der Leitung 8 weist eine sackförmige Erweiterung 10 auf, in der sich ein in Glas eingeschmolzener Magnetkörper 11 zum Öffnen des Zerschlagventils 7 befindet. Der Reaktor 9 besteht aus Quarzglas und ist mit Raschig-Ringen 12 aus Quarzglas gefüllt. Vom Reaktor 9 führt eine Leitung 13 zu einem Auffanggefäß 14. Die Leitung 13 weist oberhalb des Auffanggefäßes 14 eine Abschmelzstelle 15 auf.

Verunreinigtes $SiCl_4$ oder $GeCl_4$ wird über den Einfüllstutzen 3 und die Zuleitung 2 in den evakuierten Behälter 1 eingeführt und darin eine ausreichende Menge Chlor (z.B. einige Zehntel Molprozent) gelöst, das auf demselben Wege in den Behälter 1 gebracht wird. Danach wird der Einfüllstutzen 3 bei 4 abgeschmolzen, also geschlossen. Die Lösung 16 hat dann eine kräftige gelb-grüne Färbung. Der Teil der Apparatur jenseits des Zerschlagventils 7 ist vorher gereinigt, im Vakuum ausgeheizt und abgeschmolzen worden. Der Reaktor 9 wird auf etwa 1000 bis 1100°C aufgeheizt. Dann wird das Zerschlagventil 7 geöffnet. Wenn nun die Temperatur des $SiCl_4$ oder $GeCl_4$ im Behälter 1 erhöht wird, so beginnt die Lösung von Chlor in $SiCl_4$ oder $GeCl_4$ durch die Kapillare 5 aufzusteigen, weil im Behälter 1 der eigene Dampfdruck höher ist als der zu der Kondensationsstelle im Auffanggefäß 14 gehörige, wo nach wie vor Raumtemperatur herrscht. Die Lösung 16 wird so allmählich durch den Reaktor 9 geleitet, wo sie vollständig verdampft und wo die Reaktion der wasserstoffhaltigen Verbindungen mit Chlor abläuft. Die Kapillare 5 garantiert eine langsame, gleichmäßige Strömung der Lösung 16 in den Reaktor 9 hinein. Die Strömungsgeschwindigkeit wird so gewählt, daß sich der aus der Lösung 16 bildende Dampf einige Sekunden im Reaktor 9 aufhält.

Am Ende des Versuches wird das Auffanggefäß 14 bei 15 abgeschmolzen. Das darin befindliche Kondensat (in der Zeichnung nicht dargestellt) kann ohne weitere Reinigung beim PCVD-Verfahren zur Herstellung von Lichtleitfasern verwendet werden. Das im Kondensat gelöste überschüssige Chlor wird ebenso wie der gebildete Chlorwasserstoff schon bei den ersten Beschichtungsvorgängen des PCVD-Verfahrens restlos entfernt, und zwar wegen der hohen Flüchtigkeit dieser Substanzen. Die durch Chlorieren der

Verunreinigungen entstandenen Substanzen, z.B. $CCl_4$, stören wegen ihrer kleinen Menge praktisch nicht.

Bei einer derartigen Chlorierung wurde beispielsweise ein $SiCl_4$ erhalten, welches Lichtleitfasern mit nur 2,6 dB/km Zusatzdämpfung bei der Licht-Wellenlänge 1,38 µm lieferte. Das Ausgangsmaterial vor der Chlorierung bei 1000°C lieferte Dämpfungswerte von 17 dB/km bei 1,38 µm.

PATENTANSPRUCH

Verfahren zum Entfernen von Wasserstoff aus in Siliziumtetrachlorid oder Germaniumtetrachlorid gelösten wasserstoffhaltigen Verbindungen durch Chlorieren der wasserstoffhaltigen Verbindungen, dadurch gekennzeichnet, daß die Chlorierung bei einer Temperatur oberhalb 1000°C durchgeführt wird.

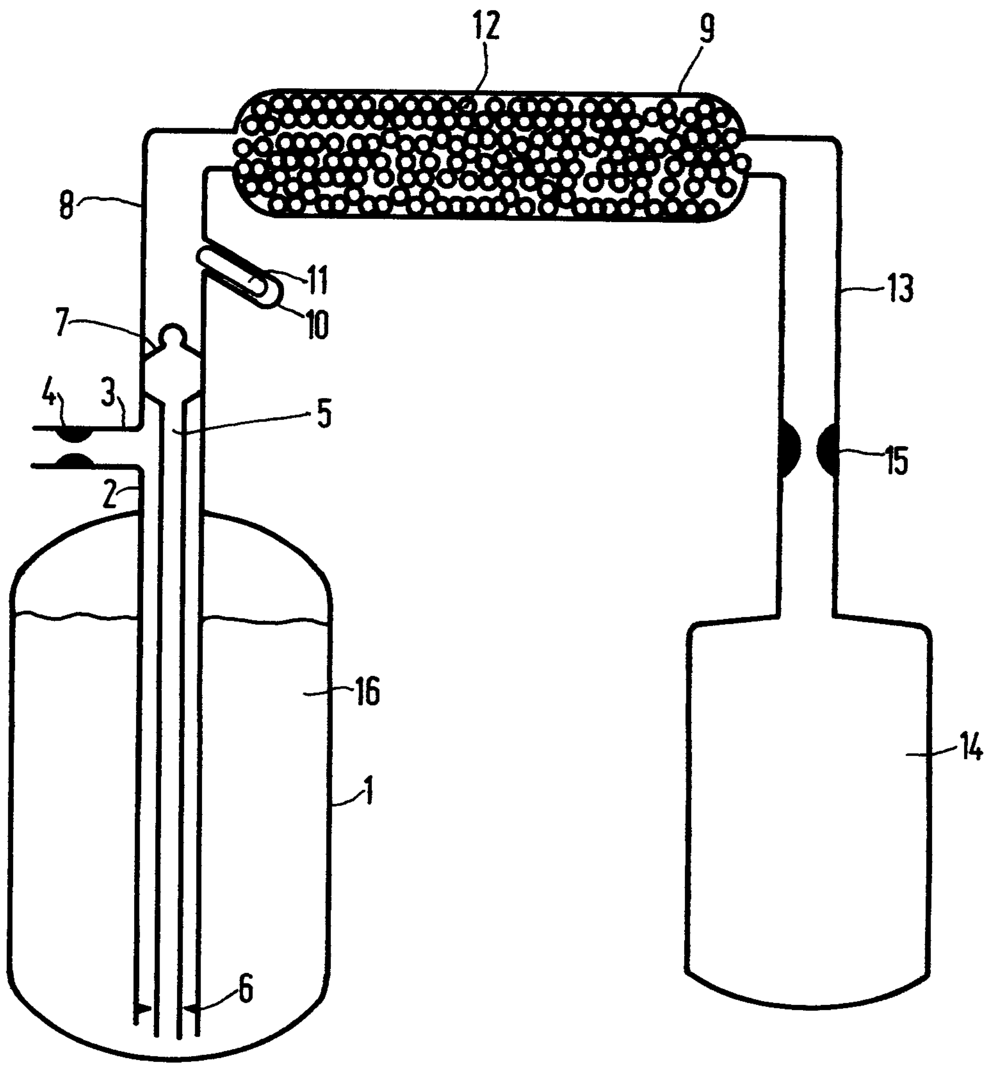
12
9
8
11
10
13
7
4
3
5
15
2
16
14
1
6